# EUROPÄISCHE PATENTANMELDUNG

(11) **EP 3 981 491 A1**
(43) Veröffentlichungstag der Anmeldung: **13.04.2022**
(21) Anmeldenummer: 20200848.8
(22) Anmeldetag: 08.10.2020
(51) Int. Cl.: B01D 46/00, B01D 46/10, B01D 46/52

(54) **FILTERANORDNUNG MIT FILTERELEMENT UND FILTERGEHÄUSE**

(71) Anmelder: Carl Freudenberg KG, 69469 Weinheim (DE)
(72) Erfinder: Felber, Uwe, 69518 Abtsteinach (DE)

(57) **Zusammenfassung**

Die Erfindung betrifft eine Filteranordnung (1000) und ist mit einem Filterelement (10) und einem Filtergehäuse (20) mit einer Aufnahmeöffnung (7) zur Aufnahme des Filterelements (10) ausgestattet, wobei das Filterelement (10) einen Faltenbalg (1) aus einem plissierten Filtermedium (3) besitzt, welcher von einem Rahmen (2) umgeben ist. Erfindungsgemäß besitzen die Aufnahmeöffnung (7) eine umlaufende Dichtung (5) mit einer Dichtlippe (6) und der Rahmen (2) eine konturierte Oberfläche (4) und die Dichtlippe (6) berührt die konturierte Oberfläche (4) dichtend.

So wird eine Filteranordnung geschaffen, welche einfach, ressourcenschonend und kostengünstig in ihrer Herstellung ist und dabei doch eine äußerst geringe Leckage zwischen Filterelement und Filtergehäuse gewährleistet.

## Beschreibung

Die Erfindung betrifft eine Filteranordnung mit Filterelement und Filtergehäuse gemäß dem Oberbegriff von Anspruch 1.

### Stand der Technik

Aus dem Stand der Technik sind die unterschiedlichsten Filter zur Filtration von Luftströmen bekannt, wie sie z.B. in Klimaanlagen, Staubsaugern, etc. zur Anwendung kommen. Um eine größere wirksame Filterfläche zu erreichen wird das Filtermedium üblicher Weise mehrfach gefaltet, insbesondere plissiert.
Ein Beispiel für ein plissiertes, kreisförmiges Filterelement ist in der EP 1 213 045 B1 dargestellt.

Wichtig für eine gute Filtrationsleistung ist, dass der gesamte zu filternde Luftstrom durch das Filterelement geführt wird und keine Leckage besteht. In anderen Worten: das Filterelement muss leckagefrei in einem Filtergehäuse aufgenommen werden.

Die DE 195 48 197 A1 schlägt dazu vor, am Rahmen des Filterelements eine Dichtlippe vorzusehen, welche mit einer Dichtfläche des Gehäuses zusammenwirkt. Bei der Montage des Filterelements im Gehäuse legt sich die Dichtlippe an die dem Filterelement zugewandte Seite des Gehäuses an. Nachteilig an diese Lösung ist, dass die Herstellung des Filters mit Dichtkante aufwändig und materialintensiv ist. Bei jedem Wechsel des Filters wird auch die Dichtung mit gewechselt, obwohl diese eine längere Lebensdauer hätte.

### Aufgabenstellung

Aufgabe der vorliegenden Erfindung ist es eine Filteranordnung mit auswechselbarem Filterelement zu schaffen, welche einfach, ressourcenschonend und kostengünstig in ihrer Herstellung ist und dabei doch Leckage zwischen Filterelement und Filtergehäuse auf ein Minimum reduziert.

### Technische Lösung

Gelöst wird diese Aufgabe durch eine Filteranordnung mit Filterelement und Filtergehäuse mit den Merkmalen von Anspruch 1.

Erfindungsgemäß wurde als vorteilhaft erkannt im Bereich des Dichtspaltes eine konturierte Oberfläche der Dichtfläche vorzusehen:
Die erfindungsgemäße Filteranordnung zum Filtern eines Fluidstroms, insbesondere eines Luftstroms, weist ein Filterelement und ein Filtergehäuse auf. Das Filtergehäuse besitzt eine Aufnahmeöffnung zur Aufnahme des Filterelements. Das Filterelement besitzt mindestens einen Faltenbalg aus einem plissierten Filtermedium, welcher von einem Rahmen umgeben ist. In vorteilhafter Weise besitzt die Aufnahmeöffnung des Filtergehäuses eine umlaufende Dichtung mit mindestens einer Dichtlippe und der Rahmen des Filterelements besitzt als Dichtfläche eine konturierte Oberfläche, wobei sich die Dichtlippe und die konturierte Oberfläche dichtend berühren, wenn das Filterelement in das Filtergehäuse montiert ist. Die Berührung kann insbesondere unter einer elastischen Vorspannung der Dichtlippe erfolgen. Vorteilhaft an dem Vorsehen der Dichtung mit Dichtlippe an dem Filtergehäuse ist, dass diese bei einem Filterwechsel nicht mit getauscht wird sondern über einen längeren Zeitraum genutzt werden kann. So werden Ressourcen geschont. Vorteilhaft an dem Vorsehen der konturierten Dichtfläche ist, dass dadurch die Dichtleistung von Dichtlippe und Dichtfläche erhöht und die Leckage verringert wird. Dank der konturierten Oberfläche ist die Position der Dichtlippe der Dichtung definiert und der Montageprozess beim Einführen des Filterelements in die Aufnahmeöffnung des Filtergehäuses wird vereinfacht.

Die Kontur der konturierten Oberfläche am Rahmen des Filterelements wird durch mindestens eine Vertiefung und/oder durch mindestens eine Erhebung gebildet, welche bevorzugt umlaufend an dem Rahmen ausgebildet ist.
Die Kontur kann beispielsweise eine Nut, eine Kerbe, eine Nase, eine Feder, eine Kante und/oder eine Wulst aufweisen. Ein Rahmen des Filterelements lässt sich mit derartigen Elementen einfach versehen oder fertigen.

In Weiterbildung der Filteranordnung kann die Kontur komplementär zur Form der Dichtlippe ausgeformt sein. Dies meint, dass Kontur und Dichtlippe derart ausgeformt sind, dass sie ineinandergreifen. Eine solche Ausgestaltung hat den Vorteil, dass zwischen konturierter Dichtfläche und Dichtkante ein Formschluss erreicht und so die Dichtleistung weiter erhöht werden kann.

In vorteilhafter Ausgestaltung der Filteranordnung ist die Kontur unter Verwendung von Druck und/oder Wärme in den Rahmen eingeprägt.

In möglicher Weiterbildung der Filteranordnung ist der Rahmen aus einem Kantenband oder aus einem Filtermedium oder aus einem Kunststoffstreifen gebildet. Ein Kantenband kann auch als Kantenstreifen bezeichnet werden. Die Ausbildung aus dem Filtermedium wird bevorzugt, wenn der Rahmen durch Umbügeln, d.h. Formen unter Wärme und Druck direkt aus dem Faltenbalg gebildet werden kann.

In Weiterbildung der erfindungsgemäßen Filteranordnung ist der Rahmen an den Faltenbalg angeklebt oder angeschweißt, z.B. mittels Ultraschallschweißen oder mittels Vibrations- bzw. Reibschweißen.

Die beschriebene Erfindung und die beschriebenen vorteilhaften Weiterbildungen der Erfindung stellen auch in Kombination miteinander - soweit dies technisch sinnvoll ist - vorteilhafte Weiterbildungen der Erfindung dar.

Hinsichtlich weiterer Vorteile und in konstruktiver und funktioneller Hinsicht vorteilhafter Ausgestaltungen der Erfindung wird auf die Unteransprüche sowie die Beschreibung von Ausführungsbeispielen unter Bezugnahme auf die beiliegenden Figuren verwiesen.

### Ausführungsbeispiel

Die Erfindung soll an Hand beigefügter Figuren noch näher erläutert werden. Einander entsprechende Elemente und Bauteile sind in den Figuren mit gleichen Bezugszeichen versehen. Zugunsten einer besseren Übersichtlichkeit der Figuren wurde auf eine maßstabsgetreue Darstellung verzichtet.
Es zeigen in schematischer Darstellung
- Fig. 1: ein Filterelement
- Fig. 2a: ein Filterelement und eine Dichtung eines Gehäuses
- Fig. 2b: Varianten des Zusammenwirkens von Dichtung und konturierter Oberfläche in Detaildarstellungen
- Fig. 3: eine Schnittdarstellung durch eine Filteranordnung

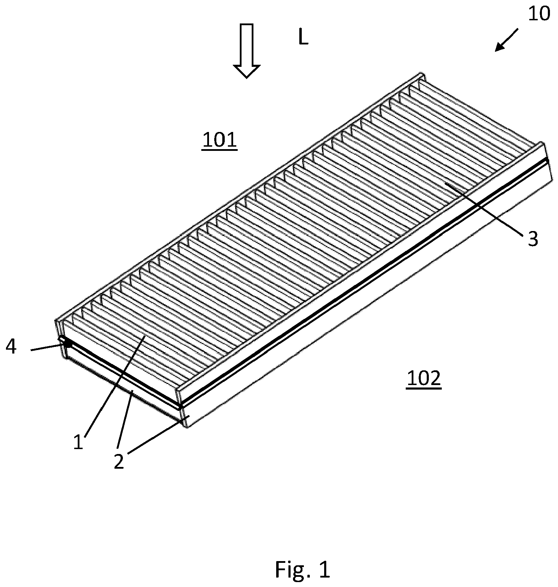

Fig. 1 zeigt eine perspektivische Ansicht eines Filterelements 10 in quaderförmiger Ausgestaltung. Das Filterelement 10 dient zum Filtern eines Luftstroms L, wobei das Filterelement 10 einen Faltenbalg 1 aus einem plissierten Filtermedium 3 besitzt und einen Rahmen 2, z.B. aus Kantenstreifen, aufweist, der an dem Faltenbalg 1 befestigt ist, z.B. mittels Verkleben oder Verschweißen.
Der Luftstrom L strömt von der Rohgasseite 101 durch das Filterelement 10 hindurch zur Reingasseite 102 und wird dabei gereinigt.

An der Außenseite des Rahmens 2 ist dieser mit einer umlaufenden, konturierten Oberfläche 4, mit einer Kontur, versehen. Die Kontur 4 ist als Feder (Erhebung) ausgestaltet.

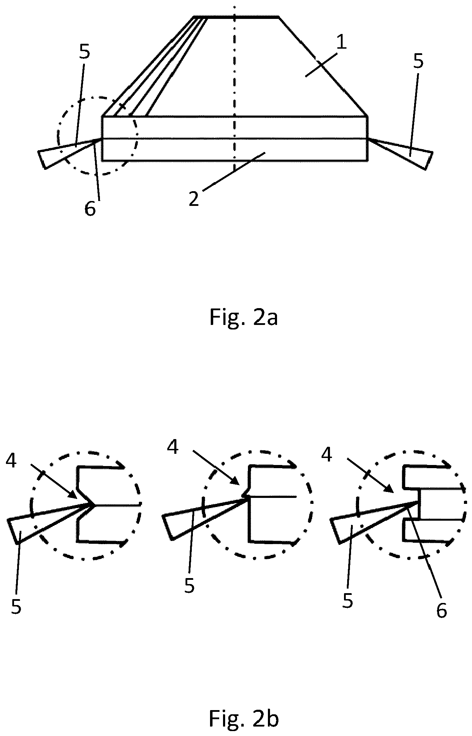

Fig. 2a zeigt ein Filterelement 10 in kegelstumpfförmiger Ausgestaltung und eine Dichtung 5 eines Filtergehäuses 20 (nicht dargestellt). Der Rahmen 2, welcher den Faltenbalg 1 umschließt, ist mit einer konturierten Oberfläche 4 versehen. Diese konturierte Oberfläche 4 bildet die Dichtfläche, welche mit der Dichtkante 6 der Dichtung 5 zusammenwirkt. Dank der konturierten Oberfläche 4 ist die Position der Dichtlippe 6 der Dichtung 5 in montiertem Zustand festgelegt.

Fig. 2b zeigt das Zusammenwirken der Dichtlippe 6 von Dichtungen 5 und Varianten konturierter Oberfläche 4 in Detaildarstellungen. Die Kontur 4 kann beispielsweise durch eine Kerbe (Vertiefung), eine Nase (Erhebung) oder eine Nut (Vertiefung) realisiert sein.

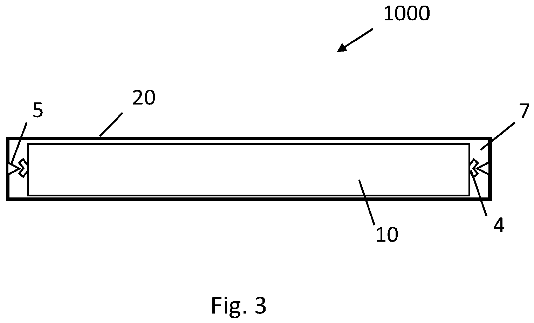

Fig. 3 zeigt eine Schnittdarstellung durch eine Filteranordnung 1000 in montiertem Zustand. Das quaderförmige Filterelement 10 ist in der quaderförmigen Aufnahmeöffnung 7 des Filtergehäuses 20 aufgenommen. In dieser Situation wirken die konturierte Oberfläche 4 am Rahmen 2 des Filterelements 10 und die an dem Filtergehäuse 20 angebrachte Dichtung 5 mit Dichtlippe 6 zusammen, sodass das Filterelement 10 leckagefrei in dem Filtergehäuse 20 aufgenommen ist.

### Bezugszeichenliste

- 1: Faltenbalg aus plissiertem Filtermedium
- 2: Rahmen des Filterelements
- 3: Filtermedium
- 4: Konturierte Oberfläche / Kontur des Rahmens
- 5: Dichtung
- 6: Dichtlippe der Dichtung
- 7: Aufnahmeöffnung des Filtergehäuses
- 10: Filterelement
- 20: Filtergehäuse

- 101: Rohgasseite
- 102: Reingasseite

- 1000: Filteranordnung

- L: Luftstrom

## Patentansprüche

1. Filteranordnung (1000) mit einem Filterelement (10) und einem Filtergehäuse (20) mit einer Aufnahmeöffnung (7) zur Aufnahme des Filterelements (10), wobei das Filterelement (10) einen Faltenbalg (1) aus einem plissierten Filtermedium (3) besitzt, welcher von einem Rahmen (2) umgeben ist,
**dadurch gekennzeichnet, dass**
die Aufnahmeöffnung (7) eine umlaufende Dichtung (5) mit einer Dichtlippe (6) und der Rahmen (2) eine konturierte Oberfläche (4) besitzen und, dass die Dichtlippe (6) die konturierte Oberfläche (4) dichtend berührt.

2. Filteranordnung nach Anspruch 1, **dadurch gekennzeichnet, dass** die Kontur (4) der konturierten Oberfläche durch mindestens eine Vertiefung und/oder durch mindestens eine Erhebung gebildet wird.

3. Filteranordnung nach Anspruch 2, **dadurch gekennzeichnet, dass** die Kontur (4) eine Nut, eine Kerbe, eine Nase, eine Feder, eine Kante und/oder eine Wulst aufweist.

4. Filteranordnung nach einem der vorangehenden Ansprüche, **dadurch**
**gekennzeichnet, dass**
die Kontur (4) komplementär zur Form der Dichtlippe (6) ausgeformt ist.

5. Filteranordnung nach einem der vorangehenden Ansprüche, **dadurch**
**gekennzeichnet, dass**
die Kontur (4) unter Verwendung von Druck und/oder Wärme eingeprägt ist.

6. Filteranordnung nach einem der vorangehenden Ansprüche **dadurch**
**gekennzeichnet, dass**
der Rahmen (2) aus einem Kantenband oder aus einem Filtermedium (3) oder aus einem Kunststoffstreifen gebildet ist.

7. Filteranordnung nach einem der vorangehenden Ansprüche, **dadurch**
**gekennzeichnet, dass**
der Rahmen (2) an den Faltenbalg (1) angeklebt oder angeschweißt ist.
